# EUROPÄISCHE PATENTSCHRIFT

(11) **EP 1 301 837 B1**
(45) Veröffentlichungstag und Bekanntmachung des Hinweises auf die Patenterteilung: **12.11.2003**
(21) Anmeldenummer: 01962855.1
(22) Anmeldetag: 13.07.2001
(51) Int. Cl.: G05D 16/00

(54) **PROPORTIONAL-DRUCKREGELVENTIL**
PROPORTIONAL PRESSURE ADJUSTMENT VALVE
SOUPAPE PROPORTIONNELLE DE REGULATION DE LA PRESSION

(30) Priorität: 19.07.2000 DE 10034959
(43) Veröffentlichungstag der Anmeldung: 16.04.2003
(73) Patentinhaber: ZF FRIEDRICHSHAFEN Aktiengesellschaft, 88038 Friedrichshafen (DE)
(72) Erfinder: RUNGE, Wolfgang, 88214 Ravensburg (DE); REMMLINGER, Hubert, 88046 Friedrichshafen (DE); MAYR, Karlheinz, A-6900 Bregenz (AT); SCHMID, Wolfgang, 88085 Langenargen (DE); SCHMIDT, Thilo, 88074 Meckenbeuren (DE)
(86) Internationale Anmeldenummer: EP0108103
(87) Internationale Veröffentlichungsnummer: WO02006911

(56) Entgegenhaltungen:
- WO-A-98/48332
- DE-A- 4 426 152
- US-A- 5 410 943

## Beschreibung

Die vorliegende Erfindung betrifft ein Proportional-Druckregelventil mit einem Ventilteil mit Zu- und Ablauföffnungen und wenigstens einem Schließmittel zum Steuern einer Blende an einer der Öffnungen sowie einem Magnetteil mit einem Magnetkern, einer Magnetspule und einem verschiebbar angeordneten Magnetanker. Mit dem Anker wirkt ein Betätigungselement zusammen, welches das Schließmittel, insbesondere an der Blende der Zulauföffnung, betätigt und wobei das Betätigungselement während des Regelvorgangs wenigstens teilweise in die Blende eindringt. Der hydraulisch wirksame Querschnitt der Blende wird dabei im wesentlichen durch die Blendenlänge, den Blendendurchmesser und den Durchmesser des Betätigungselements in der Blende bestimmt.

Ein derartiges Ventil ist beispielsweise aus der WO 98/48332 bekannt. Dieses Ventil ist mit mindestens zwei Blendenstufen ausgestattet, wovon zwei Stufen variabel und unter mechanischer bzw. hydraulischer Einwirkung nach dem Prinzip der hydraulischen Halbbrücke miteinander gekoppelt sind. Die beiden variablen Blendenstufen sind als Einlaßund als Auslaßblende eines Regeldruckraums vorgesehen und weisen jeweils einen Verschlußkörper mit definierter Geometrie auf.

Die DE 44 26 152 A1 beschreibt ein elektromagnetisches Druckregelventil, welches insbesondere für die Schaltdruckregelung von automatischen Kraftfahrzeuggetrieben einsetzbar ist. Dieses Ventil weist ein Ventilgehäuse und einen von einem Magnetanker betätigbaren und mit diesem verbundenen Steuerschieber auf, wobei der Schieber die Anschlüsse von einem Druckmittelzulauf zu einem Verbraucheranschluß bzw. zu einem Rücklauf oder Tank steuert. Der Steuerschieber ist in einer hinteren und in einer vorderen Lagerstelle im Ventilgehäuse gelagert und über eine Einstellfeder vorgespannt.

Proportional-Druckregelventile der vorgenannten Art unterliegen einer permanenten Weiterentwicklung bezüglich der funktionellen Eigenschaften, insbesondere der Optimierung der hydraulischen Eigenschaften sowie der Erhöhung der Zuverlässigkeit im Betrieb bei unterschiedlichen Bedingungen.

Aufgabe der vorliegenden Erfindung ist es daher, ein Proportional-Druckregelventil mit verbesserten hydraulischen Eigenschaften anzugeben, welches insbesondere ein durchflußoptimiertes Ventilteil aufweist, das speziell im Bereich niedriger Temperaturen, also bei höheren Viskositäten der Hydraulikflüssigkeit, wesentlich geringere Strömungswiderstände aufweist.

Ausgehend von einem Proportional-Druckregelventil der eingangs genannten Art erfolgt die Lösung dieser Aufgabe mit den im Anspruch 1 angegebenen Merkmalen. Vorteilhafte Ausgestaltungen der Erfindung sind in den Unteransprüchen beschrieben.

Das Proportional-Druckregelventil weist erfindungsgemäß eine optimierte Ausprägung der durchflußbestimmenden Zuführgeometrie auf, wobei das Verhältnis der Blendenlänge zu dem Blendendurchmesser kleiner 2,0 ist und diese durchflußbestimmende Blende insbesondere in der Zulauföffnung des Ventils angeordnet ist. Somit wird vorteilhafterweise erreicht, daß das erfindungsgemäße Ventil geringere Strömungsverluste, inbesondere bei hohen Ölviskositäten, also bei niedrigen Temperaturen, aufweist. Dadurch werden höhere Durchflußmengen und kürzere Ansprechzeiten des Ventils erzielt, so daß die erfindungsgemäße Ausbildung des Proportional-Druckregelventils mit Vorteil bessere dynamische Werte ermöglicht.

In einer vorteilhaften Weiterbildung der Erfindung wird vorgeschlagen, daß das Betätigungselement ein stiftförmiges Endstück aufweist, welches in die Blende eindringt, wobei anstelle des Betätigungselements auch ein Teil des Schließmittels in die Blende eindringen kann. Dabei ist das Verhältnis des Durchmessers des Betätigungselements in der Blende zu dem Blendendurchmesser kleiner als 0,9 und der Durchmesser des stiftförmigen Endstücks des Betätigungselements ist kleiner als 1,0 mm. Bei einer derartigen Ausbildung des zuführseitigen Ventils wird vorteilhafterweise eine verbesserte Funktion, insbesondere für die Druckregelung in automatischen Kraftfahrzeuggetrieben, geschaffen.

In einer weiteren Ausbildung der Erfindung wird eine strömungsbegünstigte Ausprägung der zu- und ablaufseitigen Kanten an der Blende beschrieben. Dabei sind die Radien und/oder die Fasen der Blende und/oder an dem mit der Blende korrespondierenden Endstück des Betätigungselements kleiner ausgebildet als die Blendenlänge selbst, wobei insbesondere die Radien einen Wert kleiner oder gleich 0,1 mal der Blendenlänge aufweisen. Dadurch werden ebenfalls wesentlich geringere Strömungswiderstände der durchflußbestimmenden Ventilgeometrie ermöglicht.

Das Proportional-Druckregelventil weist ein Ventilteil mit zwei Sitzventilen auf, wobei insbesondere das eine Sitzventil als Schließmittel eine Kugel enthält und das andere Sitzventil als Flachsitz ausgebildet ist. Dadurch wird vorteilhafterweise erreicht, daß das erfindungsgemäße Ventil bei geringen Anforderungen an die Genauigkeit der einzelnen Bauteile eine verhältnismäßig hohe Dichtigkeit, insbesondere in seinen Endstellungen, gewährleistet, wodurch bei einem durchflußoptimierten Ventil auch die Leckageeigenschaften minimiert werden.

In einer besonderen Weiterbildung der Erfindung, welche auch eine eigenständige Erfindung darstellen kann, wird vorgeschlagen, daß zwischen den beiden Sitzventilen eine zusätzliche Lochblende angeordnet ist, welche nun anstelle der zulaufseitigen Blende den durchflußbestimmenden Querschnitt zwischen der Zulauföffnung und einer Ablauföffnung darstellt. Auch mit einer derartigen Lochblende werden, insbesondere im Minus-Temperaturbereich, wesentlich geringere Strömungswiderstände erreicht. Die beschriebene Lochblende ist vorteilhafterweise exakter und einfacher herzustellen als die vorgenannte Ringblende. Auch mit einem derart funktionsoptimierten Druckregler sind höhere Durchflußmengen und kürzere Ansprechzeiten erzielbar und die dynamischen Werte des Reglers werden verbessert. Weiterhin ist der Einfluß durch eine mögliche Exzentrizität des stiftförmigen Endes des Betätigungselements in der Blende ausgeschlossen.

Vorteilhafterweise ist zwischen dem zulaufseitigen Sitzventil und der Lochblende ein hydraulisch abdichtbarer Raum vorgesehen, welcher beispielsweise durch einen ringförmigen Dichtkörper aus flexiblem Material erzeugbar ist.

Zwischen der Lochblende und der Ablauföffnung bzw. dem tankseitigen Sitzventil ist eine hydraulische Verbindung zu der Arbeitsdruckleitung vorgesehen, so daß die Arbeitsdruckleitung vorteilhafterweise in radialer als auch in axialer Richtung in dem Ventilkörper angeordnet sein kann.

Bei Realisierung einer derartigen Lochblende wird die vorgenannte Ringblende in der Zulauföffnung in ihrem Außendurchmesser vergrößert, so daß der durchflußbestimmende Querschnitt gezielt in die Lochblende verlagert wird. Durch die Vergrößerung des Außendurchmessers der Ringblende wird die Mindestöffnungskraft erhöht, wodurch beim öffnen der Ringblende ein Öffnungskraftstoß auftreten kann. Zur Dämpfung dieses Öffnungskraftstoßes des zulaufseitigen Sitzventils wird vorgeschlagen, eine Feder, insbesondere eine Druckfeder, zwischen dem Magnetkern und dem Magnetanker vorzusehen.

Mit einem erfindungsgemäßen Proportional-Druckregelventil kann bei angepaßter Ausbildung des Magnetteils sowohl eine Schalt- als auch eine Regelfunktion ausgeführt werden. Somit sind vorteilhafterweise zwei Funktionsarten mit einem Ventil möglich.

Weitere Ziele, Vorteile und Ausgestaltungen der Erfindung ergeben sich aus der nachfolgenden Beschreibung der Ausführungsbeispiele, die in den Figuren näher dargestellt sind. Dabei bilden alle beschriebenen und/oder bildlich dargestellten Merkmale und Kennzeichen für sich oder in beliebiger, sinnvoller Kombination den Gegenstand der Erfindung, unabhängig von ihrer Zusammenfassung in den Ansprüchen und deren Rückbeziehung.

Es zeigen:
- Fig. 1: ein Ventilteil für ein erfindungsgemäßes Proportional-Druckregelventil mit geschlossener Zulaufblende in Schnitt-Darstellung;
- Fig. 2: das Ventilteil gemäß Fig. 1 mit geöffneter Zulaufblende;
- Fig. 3: ein Detail X aus Fig. 2 in vergrößerter Darstellung und
- Fig. 4: ein erfindungsgemäßes Proportional-Druckregelventil in einer weiteren Ausbildung in Schnitt-Darstellung und in verkleinertem Maßstab.

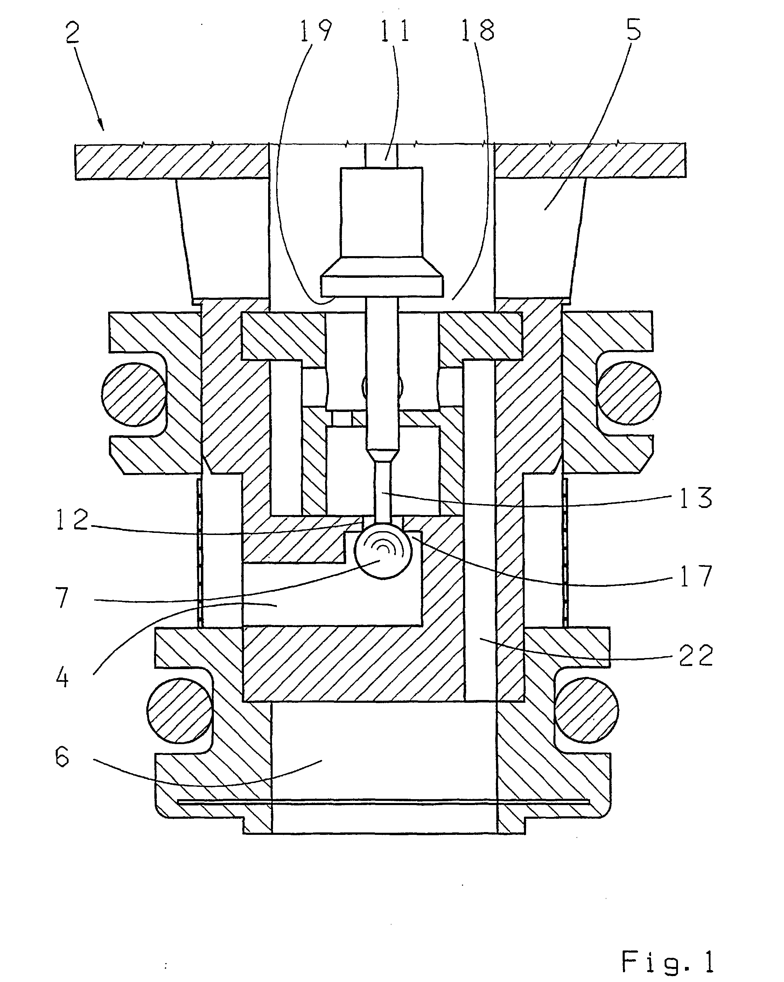

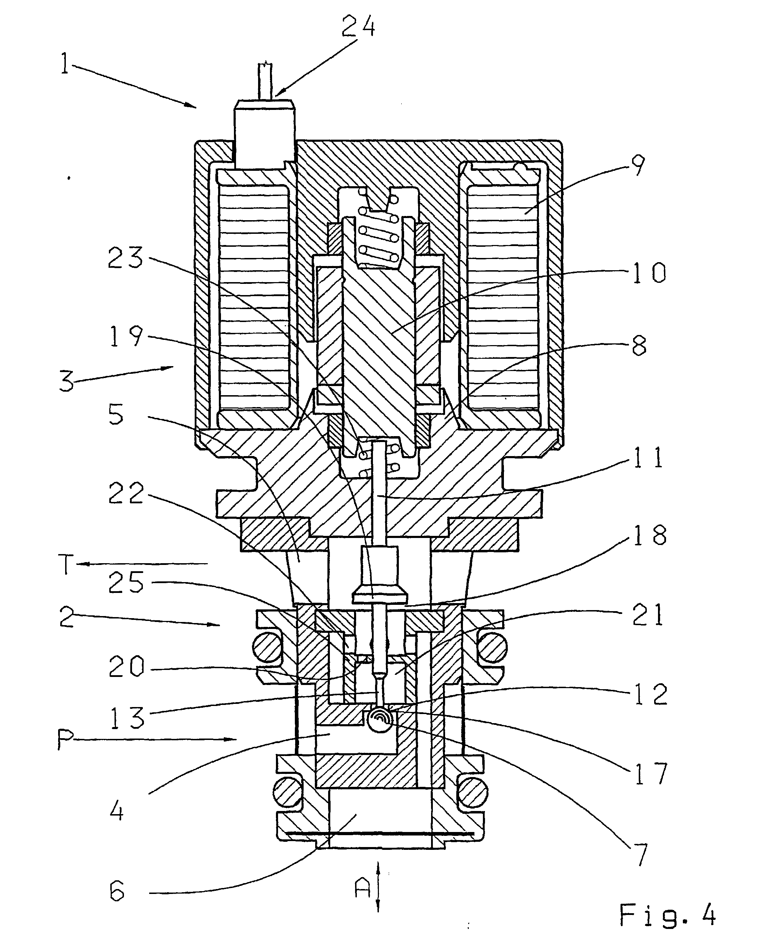

Das Ventilteil 2 (Fig. 1) weist eine Zulauföffnung 4, eine tankseitige Ablauföffnung 5 sowie einen Arbeitsdruckanschluß 6 auf. Das Ventilteil 2 ist ferner mit einem zulaufseitigen, ersten Sitzventil 17 und einem ablaufseitigen Sitzventil 18 ausgestattet. Das Schließmittel des ersten Sitzventils 17 ist als Kugel 7 ausgebildet, welche die zulaufseitige Blende 12 steuert. Das ablaufseitige Sitzventil 18 ist mit einem Flachsitz 19 versehen, welcher von einem in Fig. 4 dargestellten Magnetanker über das Betätigungselement 11 betätigbar ist. Das Betätigungselement 11 weist ein stiftförmiges Endstück 13 auf, welches das Schließmittel 7 in der zulaufseitigen Blende 12 betätigt. Das Betätigungselement 11 ist derart bemessen, daß die beiden Sitzventile 17 und 18 nach dem Prinzip einer hydraulischen Halbbrücke miteinander verschaltet sind. Dabei ist beispielsweise das zulaufseitige Sitzventil 17 geschlossen, während das ablaufseitige Sitzventil 18 geöffnet ist. In dem Raum zwischen dem ersten und dem zweiten Sitzventil 17 und 18 ist eine hydraulische Verbindung 22 zu der Arbeitsdruckleitung 6 angeordnet.

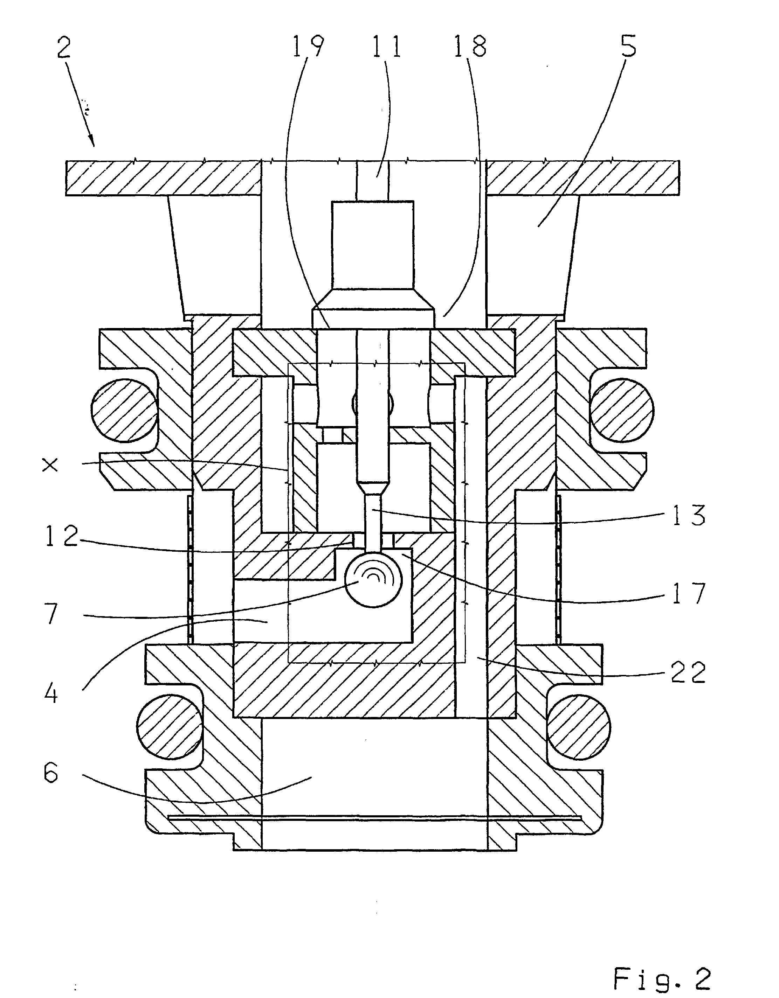

In der entgegengesetzten Endposition (Fig. 2) ist das zulaufseitige Sitzventil 17 voll geöffnet, während das abiaufseitige Sitzventil 18 geschlossen ist. (In den Abbildungen sind gleiche Bauteile mit den selben Bezugszeichen gekennzeichnet.) Das stiftförmige Endstück 13 des Betätigungselements 11 durchdringt die Blende 12 und hebt das kugelförmige Schließelement 7 von seiner ringförmigen Dichtfläche ab. Das durch die Zulauföffnung 4 zuströmende Druckmedium gelangt durch die Blende 12 in einen Raum zwischen den beiden Ventilsitzen 17 und 18. Hier wird das Druckmedium umgelenkt und durch die hydraulische Verbindung 22 zu der Arbeitsdruckleitung 6 geführt.

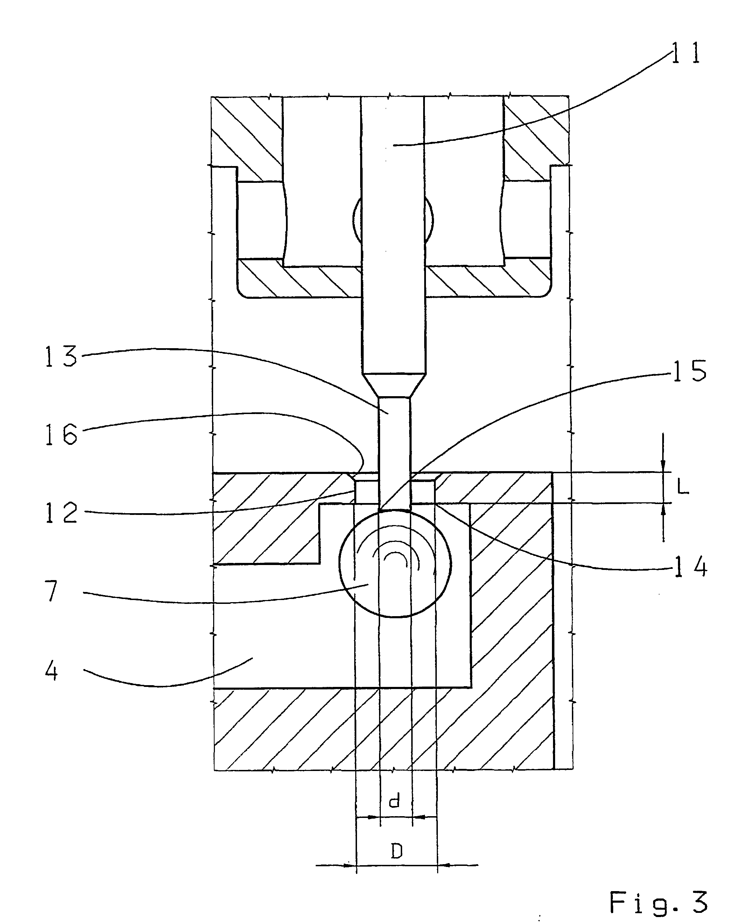

Die zulaufseitige Blende 12 (Fig. 3) weist sowohl an ihrer Zulaufseite einen Radius 14 als auch an ihrer Ablaufseite eine Fase 16 auf. Die Stirnseite des stiftförmigen Endstücks 13 des Betätigungselements 11 ist ebenfalls mit einem Radius 15 versehen. In einem vorteilhaften Ausführungsbeispiel eines Proportional-Druckregelventils zur Verwendung als Schaltventil in einem Kraftfahrzeug-Automatgetriebe beträgt der Durchmesser der Kugel 7 1,588 mm, während der Durchmesser der korrespondierenden Blende 12 1,20 mm beträgt. Der Durchmesser d des stiftförmigen Endstücks 13 beträgt 0,60 mm und die Blendenlänge L 0,50 mm. Der zulaufseitige Radius 14 der Blende 12 beträgt 0,05, der Radius 15 an dem Endstück 13 beträgt 0,02 mm und die Fase 16 ist mit 0,20 mm mal 45° ausgebildet.

In einer alternativen Ausbildung (Fig. 4) ist ein Proportional-Druckregelventil 1 gezeigt, welches aus einem Ventilteil 2 und einem Magnetteil 3 besteht. Das Magnetteil 3 besteht im wesentlichen aus einem Magnetkern 8, einer Magnetspule 9 sowie einem beweglich angeordneten Magnetanker 10, welcher mit dem Betätigungselement 11 zusammenwirkt. Zwischen dem Magnetkern 8 und dem Anker 10 ist eine Druckfeder 23 zur Dämpfung eines Kraftstoßes beim Öffnen des zulaufseitigen Sitzventils vorgesehen. Das Magnetteil 3 ist über eine elektrische Zuleitung 24 anschließbar.

Das Ventilteil 2 ist in seinem Grundaufbau ähnlich den vorbeschriebenen Ventilteilen, weist jedoch eine mit einer Druckleitung P in Verbindung stehende Zulauföffnung 4 auf sowie eine mit einem Tank T in Verbindung stehende Ablauföffnung 5 und einen mit einer Arbeitsdruckleitung A in Verbindung stehenden Anschluß 6. Zwischen dem zulaufseitigen Sitzventil 17 und dem ablaufseitigen Ventil 18 ist eine Lochblende 20 vorgesehen. Damit die Lochblende 20 den durchflußbestimmenden Querschnitt des Ventilteils bildet, ist die Bohrung der Ringblende 12 gegenüber der in den Fig. 1 bis 3 dargestellten Blende geringfügig vergrößert, z. B. um 0,30 bis 0,50 mm im Außendurchmesser D. Eine derartige Lochblende ist exakter und einfacher herstellbar als die vorbeschriebenen Ringblenden. Der Raum 21 zwischen dem Sitzventil 17 und der Lochblende 20 ist durch einen Ringkörper 25 begrenzt, so daß das Druckmedium zunächst durch die Lochblende 20 hindurchströmen muß, um zu der hydraulischen Verbindung 22 zu der Arbeitsdruckleitung 6 zu gelangen. Zur Dämpfung eines durch die vergrößerte Fläche der Blende 20 möglicherweise auftretenden Öffnungskraftstoßes des zulaufseitigen Sitzventils 17 ist eine Druckfeder 23 zwischen dem Magnetkern 8 und dem Magnetanker 10 angeordnet.

In der in Fig. 4 dargestellten Endposition ist die zulaufseitige Ringblende 12 geschlossen, während das ablaufseitige Sitzventil 18 geöffnet ist. Bei einer umgekehrten, nicht dargestellten Endposition der beiden Sitzventile ist die Kugel 7 von dem Sitz der Blende 12 abgehoben und das Sitzventil 18 geschlossen. Das Druckmedium gelangt so durch die Zulauföffnung 4 und über die Ringblende 12 zu dem Zwischenraum 21. Danach strömt das Druckmedium durch die durchflußbestimmende Lochblende 20 und die hydraulische Verbindung 22 zu dem Arbeitsdruckanschluß 6.

### Bezugszeichen

- 1: Proportional-Druckregelventil
- 2: Ventilteil
- 3: Magnetteil
- 4: Zulauföffnung
- 5: Ablauföffnung
- 6: Arbeitsdruckleitung/-anschluß
- 7: Schließmittel (Kugel)
- 8: Magnetkern
- 9: Magnetspule
- 10: Magnetanker
- 11: Betätigungselement
- 12: Ringblende
- 13: Endstück (Stift)
- 14: Radius
- 15: Radius
- 16: Fase
- 17: Sitzventil
- 18: Sitzventil
- 19: Flachsitz
- 20: Lochblende
- 21: Raum
- 22: hydraulische Verbindung
- 23: Druckfeder
- 24: elektrische Zuleitung
- 25: Ringkörper

- P: Druckleitung
- T: Tank
- A: Arbeitsdruckleitung
- X: Detail
- d: Stiftdurchmesser
- D: Blendendurchmesser
- L: Blendenlänge

## Patentansprüche

1. Proportional-Druckregelventil (1) mit
- einem Ventilteil (2) mit Zu- und Ablauföffnungen (4, 5, 6) und wenigstens einem Schließmittel (7) zum Steuern einer Blende (12) an einer der Öffnungen,
- einem Magnetteil (3) mit einem Magnetkern (8), einer Magnetspule (9) und einem verschiebbar angeordneten Magnetanker (10) und
- einem mit dem Anker (10) zusammenwirkenden Betätigungselement (11), welches das Schließmittel (7) betätigt, wobei
- der hydraulisch wirksame Querschnitt der Blende (12) im wesentlichen durch die Blendenlänge (L), den Blendendurchmesser (D) und den Durchmesser (d) des in die Blende eindringenden Teils des Betätigungselements (11) bestimmt wird,
**dadurch gekennzeichnet, daß** das Verhältnis von Blendenlänge (L) zu Blendendurchmesser (D) kleiner 2,0 ist.

2. Proportional-Druckregelventil nach Anspruch 1, **dadurch gekennzeichnet, daß** das Verhältnis des Durchmessers (d) des stiftförmigen Endstücks (13) des Betätigungselements (11) in der Blende (12) zum Blendendurchmesser (D) kleiner 0,9 ist und der Durchmesser (d) insbesondere kleiner 1,0 mm beträgt.

3. Proportional-Druckregelventil nach Anspruch 1 oder 2, dadurch gekenrzeichnet, daß die Radien (14, 15) und/oder Fasen (16) an der Blende (12) und/ oder an dem mit der Blende (12) korrespondierenden Endstück (13) des Betätigungselements (11) kleiner als die Blendenlänge (L) sind, wobei insbesondere die Radien einen Wert kleiner oder gleich 0,1 mal (L) aufweisen.

4. Proportional-Druckregelventil nach Anspruch 1, 2 oder 3, **dadurch gekennzeichnet, daß** das Ventilteil (2) zwei Sitzventile aufweist, wobei insbesondere ein Sitzventil (17) als Schließmittel eine Kugel (7) enthält und das andere Sitzventil (18) als Flachsitz (19) ausgebildet ist.

5. Proportional-Druckregelventil nach einem der vorangehenden Ansprüche, **dadurch gekennzeichnet, daß** zwischen den beiden Sitzventilen (17, 18) eine Lochblende (20) angeordnet ist, welche den durchflußbestimmenden Querschnitt zwischen der Zulauföffnung (4) und einer Ablauföffnung, insbesondere der Arbeitsdruckleitung (6), darstellt.

6. Proportional-Druckregelventil nach Anspruch 5, **dadurch gekennzeichnet, daß** zwischen dem zulaufseitigen Sitzventil (17) und der Lochblende (20) ein hydraulisch abdichtbarer Raum (21) vorgesehen ist.

7. Proportional-Druckregelventil nach Anspruch 5 oder 6, **dadurch gekennzeichnet, daß** zwischen der Lochblende (20) und dem ablauf- bzw. tankseitigen Sitzventil (18) eine hydraulische Verbindung (22) zu der Arbeitsdruckleitung (6) vorgesehen ist.

8. Proportional-Druckregelventil nach Anspruch 5, 6 oder 7, **dadurch gekennzeichnet, daß** zur Dämpfung eines Kraftstoßes beim Öffnen des zulaufseitigen Sitzventils (17) eine Feder, insbesondere eine Druckfeder (23), zwischen dem Magnetkern (8) und dem Magnetanker (10) vorgesehen ist.

9. Proportional-Druckregelventil nach einem der vorangehenden Ansprüche, **dadurch gekennzeichnet, daß** mit dem Ventil (1) sowohl eine Schalt- als auch eine Regelfunktion ausführbar ist.

## Claims

1. Proportional pressure control valve (1) comprising
- a valve part (2) having inlet- and outlet openings (4, 5, 6) and at least one closing means (7) for controlling an orifice (12) at one of the openings,
- a magnet part (3) having a magnet core (8), a magnet coil (9) and a displaceably disposed magnet armature (10) and
- an actuating element (11), which interacts with the armature (10) and actuates the closing means (7), wherein
- the hydraulically effective cross section of the orifice (12) is determined substantially by the orifice length (L), the orifice diameter (D) and the diameter (d) of the part of the actuating element (11) that penetrates into the orifice,
**characterized in that** the ratio of orifice length (L) to orifice diameter (D) is less than 2.0.

2. Proportional pressure control valve according to claim 1, **characterized in that** the ratio of the diameter (d) of the pin-shaped end piece (13) of the actuating element (11) in the orifice (12) to the orifice diameter (D) is less than 0.9 and the diameter (d) is in particular less than 1.0 mm.

3. Proportional pressure control valve according to claim 1, **characterized in that** the radii (14, 15) and/or chamfers (16) on the orifice (12) and/or on the end piece (13) of the actuating element (11) that corresponds with the orifice (12) are smaller than the orifice length (L), wherein in particular the radii have a value smaller than or equal to 0.1 times (L).

4. Proportional pressure control valve according to claim 1, 2 or 3, **characterized in that** the valve part (2) comprises two seat valves, wherein in particular one seat valve (17) comprises a ball (7) as a closing means and the other seat valve (18) is designed as a flat seat (19).

5. Proportional pressure control valve according to one of the preceding claims, **characterized in that** between the two seat valves (17, 18) a circular orifice (20) is disposed, which is the throughflow-determining cross section between the inlet opening (4) and an outlet opening, in particular the working pressure line (6).

6. Proportional pressure control valve according to claim 5, **characterized in that** between the inlet-side seat valve (17) and the circular orifice (20) a hydraulically sealable space (21) is provided.

7. Proportional pressure control valve according to claim 5 or 6, **characterized in that** between the circular orifice (20) and the outlet- and/or tank-side seat valve (18) a hydraulic connection (22) to the working pressure line (6) is provided.

8. Proportional pressure control valve according to claim 5, 6 or 7, **characterized in that** for damping a force impact during opening of the inlet-side seat valve (17) a spring, in particular a compression spring (23), is provided between the magnet core (8) and the magnet armature (10).

9. Proportional pressure control valve according to one of the preceding claims, **characterized in that** with the valve (1) both a shift function and a control function are effectable.

## Revendications

1. Soupape de réglage de pression proportionnelle (1) comprenant :
- une partie soupape (2) comportant des ouvertures d'arrivée et d'écoulement (4, 5, 6) et au moins un obturateur (7) servant à commander un diaphragme (12) au niveau d'une des ouvertures,
- une partie magnétique (3) comprenant un noyau magnétique (8), une bobine magnétique (9) et une armature magnétique (10) disposée mobile en translation, et
- un élément d'actionnement (11) coopérant avec l'armature (10), qui actionne l'obturateur (7), dans lequel
- la section hydrauliquement efficace du diaphragme (12) est essentiellement déterminée par la longueur (L) du diaphragme, le diamètre (D) du diaphragme et le diamètre (d) de la partie de l'élément d'actionnement (11) qui pénètre dans le diaphragme,
**caractérisée en ce que** le rapport entre la longueur (L) du diaphragme et le diamètre (D) du diaphragme est inférieur à 2,0.

2. Soupape de réglage de pression proportionnelle selon la revendication 1, **caractérisée en ce que** le rapport entre le diamètre (d) de l'embout (13) en forme de tige de l'élément d'actionnement (11) situé dans le diaphragme (12) et le diamètre (D) du diaphragme est inférieur à 0,9, et le diamètre (d) est en particulier inférieur à 1,0 mm.

3. Soupape de réglage de pression proportionnelle selon la revendication 1 ou 2, **caractérisée en ce que** les rayons (14, 15) et/ou les chanfreins (16) prévus sur le diaphragme (12) et/ou sur l'embout (13) de l'élément d'actionnement (11) qui correspond au diaphragme (12) sont inférieurs à la longueur (L) du diaphragme, les rayons ayant en particulier une valeur inférieure ou égale à 0,1 fois (L).

4. Soupape de réglage de pression proportionnelle selon la revendication 1, 2 ou 3, **caractérisée en ce que** la partie soupape (2) comporte deux soupapes à siège où, en particulier une soupape à siège (17) comprend une bille (7) comme obturateur et l'autre soupape à siège (18) est réalisée en forme de siège plat (19).

5. Soupape de réglage de pression proportionnelle selon l'une des revendications précédentes, **caractérisée en ce que**, entre les deux soupapes à siège (17, 18), est disposé un diaphragme percé (20) qui représente la section déterminant le débit entre l'ouverture d'arrivée (4) et une ouverture d'écoulement, en particulier la conduite de pression de travail (6).

6. Soupape de réglage de pression proportionnelle selon la revendication 5, **caractérisée en ce que**, entre la soupape à siège (17) côté arrivée et le diaphragme percé (20), est prévue une chambre (21) pouvant être fermée hydrauliquement.

7. Soupape de réglage de pression proportionnelle selon la revendication 5 ou 6, **caractérisée en ce que**, entre le diaphragme percé (20) et la soupape à siège (18) côté écoulement ou côté réservoir, est prévue une liaison hydraulique (22) menant à la conduite de pression de travail (6).

8. Soupape de réglage de pression proportionnelle selon la revendication 5, 6 ou 7, **caractérisée en ce qu'**un ressort, en particulier un ressort de compression (23), est prévu entre le noyau magnétique (8) et l'armature magnétique (10) pour amortir un choc lors de l'ouverture de la soupape à siège (17) côté arrivée.

9. Soupape de réglage de pression proportionnelle selon l'une des revendications précédentes, **caractérisée en ce que**, avec la soupape (1), il est possible d'exécuter une fonction tout ou rien aussi bien qu'une fonction de réglage.
